# EUROPEAN PATENT APPLICATION

(11) **EP 4 553 938 A1**
(43) Date of publication of application: **14.05.2025**
(21) Application number: 23918991.3
(22) Date of filing: 31.01.2023
(51) Int. Cl.: H01M 10/04, H01M 50/588, H01M 50/593

(54) **BATTERY MONOMER, BATTERY AND ELECTRIC DEVICE**

(71) Applicant: Contemporary Amperex Technology (Hong Kong) Limited, Central, Hong Kong (CN)
(72) Inventor: XU, Liangfan, Ningde, Fujian 352100 (CN); ZHOU, Wenlin, Ningde, Fujian 352100 (CN); ZHANG, Qianqian, Ningde, Fujian 352100 (CN); LI, Xing, Ningde, Fujian 352100 (CN); JIN, Haizu, Ningde, Fujian 352100 (CN)
(74) Representative: Ran, Handong
(86) International application number: PCT/CN2023/074009
(87) International publication number: WO 2024/159409

(57) **Abstract**

The present application provides a battery monomer, a battery and an electric device, and belongs to the technical field of batteries. The battery monomer comprises a housing, an electrode assembly and an insulating piece. The housing comprises a first wall. The electrode assembly is accommodated in the housing. The insulating piece covers the outer side of the housing, and covers the outer surface of the first wall facing away from the electrode assembly in a thickness direction of the first wall. The insulating piece is provided with a first hollowed-out area. The first hollowed-out area is located on the side of the first wall facing away from the electrode assembly in the thickness direction of the first wall. The first wall forms a first exposed area at the position corresponding to the first hollowed-out area. The first exposed area is used for being connected with a pressing strip. When the battery monomer with this structure is assembled to form a battery, the pressing strip can be directly connected with the housing, such that the phenomenon that the housing is easy to fall off due to indirect connection between the housing and the pressing strip through the insulating piece is reduced, and the connecting strength can be improved, and therefore the assembling quality and the use stability of the battery with the battery monomer can be improved.

## Description

### TECHNICAL FIELD

The present application relates to the technical field of batteries, in particular to a battery cell, battery, and electric device.

### BACKGROUND ART

In recent years, new energy vehicles have experienced a leapfrog development. In the field of electric vehicles, power batteries serve as the energy source for electric vehicles and play an irreplaceable important role. With the strong promotion of new energy vehicles, the demand for power battery products is also increasing. The battery is composed of multiple battery cells stacked together; however, existing batteries exhibit a phenomenon of loose assembly after multiple battery cells are assembled into groups, and the battery cells are prone to the risk of shaking within the battery during use, thus resulting in poor assembly quality and stability of the battery.

### SUMMARY

The embodiments of the present application provide a battery cell, a battery, and an electric device, which can effectively improve the assembly quality and stability of the battery.

In a first aspect, the present application provides a battery cell, including a housing, an electrode assembly, and an insulating member; the housing includes a first wall; the electrode assembly is accommodated within the housing; the insulating member is covered on an outer side of the housing and covers an outer surface of the first wall that is away from the electrode assembly in a thickness direction of the first wall, wherein the insulating member is provided with a first hollow region; along the thickness direction of the first wall, the first hollow region is positioned on a side of the first wall that is away from the electrode assembly; the first wall forms a first exposed region at a position corresponding to the first hollow region; and the first exposed region is configured for connecting with a compression strip.

In the above technical solution, the outer surface of the housing is covered with an insulating member, which allows the insulating member to insulate and isolate the housing of the battery cell from the external environment, thereby reducing the risk of short circuits during the use of the battery cell. By arranging the first hollow region at the position corresponding to one side of the first wall of the insulating member, a first exposed region is formed on the first wall of the housing, enabling the battery cell to connect with the compression strip through the first exposed region. Therefore, when the battery cell is assembled into a battery, the compression strip can connect directly with the housing, which enables the housing to be connected indirectly to the compression strip without the need for an insulating member. This helps to reduce the impact of the insulating member on the connection effectiveness between the battery cell and the compression strip and can effectively enhance the connection strength, so as to reduce the phenomenon of easy detachment due to indirect connections between the housing and the compression strip through the insulating member. Therefore, while achieving an insulation effect between the battery cell and the external environment, the assembly quality of the battery cell during grouping can be improved, thus benefiting the assembly quality and stability of the battery comprising the battery cells.

In some embodiments, an area of the first exposed region is S, satisfying a condition: S ≥ 50 mm².

In the above technical solution, by setting the area of the first exposed region of the first wall, which is configured for connecting with the compression strip, to be greater than or equal to 50 mm², the sufficient area is ensured for mutual connection between the first wall and the compression strip. This facilitates an increase in the connection area between the first wall and the compression strip, thereby enhancing the connection strength.

In some embodiments, a minimum distance between the first exposed region and an edge of the first wall is D₁, satisfying a condition: 1 mm ≤ D₁ ≤ 5 mm.

In the above technical solution, by setting the minimum distance between the first exposed region and the edge of the first wall to be between 1 mm and 5 mm, the minimum distance between the first hollow region arranged on the insulating member and the edge of the first wall is from 1 mm to 5 mm. On the one hand, it can alleviate the phenomenon the distance between the first hollow region and the edge of the first wall is too small, which makes it difficult to manufacture the first hollow region; thus, the difficulty of manufacturing battery cells is reduced. On the other hand, it can alleviate the phenomenon of excessive insulating member covering the first wall due to the large distance between the first hollow region and the edge of the first wall, which results in a smaller area of the first exposed region formed on the first wall.

In some embodiments, the housing further includes a second wall and a side wall; along the thickness direction of the first wall, the second wall is arranged opposite to the first wall, and the side wall is arranged around the first wall and the second wall; the insulating member includes a first insulating member and a second insulating member which are separately provided, wherein the first insulating member covers an outer surface of the first wall away from the electrode assembly, and the second insulating member covers an outer surface of the second wall away from the electrode assembly and an outer surface of the side wall away from the electrode assembly.

In the above technical solution, by providing the insulating member as a separately arranged first insulating member and second insulating member, where the first insulating member is a structure that covers the first wall and the second insulating member is a structure that covers the side wall and the second wall, the first insulating member and second insulating member of the insulating member correspond to the first wall of the housing and the second wall and the side wall of the housing, respectively. This facilitates a reduction in the assembly difficulty between the insulating member and the housing.

In some embodiments, the first hollow region is provided on the first insulating member.

In the above technical solution, by separately providing the first hollow region on the first insulating member to form a first exposed region on the first wall, the structure of the insulating member is simple, facilitating processing and manufacturing, and ensuring that the first hollow region and the second insulating member do not affect each other, which is beneficial for reducing the assembly difficulty of the battery cell.

In some embodiments, the second insulating member is provided with a flange portion, wherein the flange portion is arranged along a circumferential direction of the first wall and is located on a side of the first wall away from the electrode assembly. The flange portion and the edge of the first insulating member jointly enclose to form the first hollow region.

In the above technical solution, the second insulating member is provided with a flange portion arranged on the first wall along the circumferential direction of the first wall and located at the edge of the first wall, such that the edge of the first insulating member arranged on the first wall and a portion of the flange portion jointly enclose to form the first hollow region, thereby forming a first exposed region on the first wall. By using the structure, on the one hand, the battery cell does not need to have the first insulating member configured with a through-hole structure, which helps improve the overall structural strength of the first insulating member; on the other hand, it is beneficial for controlling the size and dimensions of the first hollow region.

In some embodiments, along the thickness direction of the first wall, a portion of the flange portion is located between the first wall and the first insulating member.

In the above technical solution, by providing the portion of the flange portion of the second insulating member in the thickness direction of the first wall between the first wall and the first insulating member, the first insulating member can press the portion of the flange portion against the first wall, which is beneficial for improving the connection stability of the flange portion of the second insulating member on the first wall, thus reducing the occurrence of the flange portion falling off.

In some embodiments, the first insulating member and the flange portion jointly enclose to form two first hollow regions; and along the first direction, the two first hollow regions are respectively located at the two ends of the first insulating member. The first direction is perpendicular to the thickness direction of the first wall.

In the above technical solution, by enclosing the two ends of the first insulating member with the flange portion in the first direction to form two hollow regions, two first exposed regions arranged in the first direction are formed on the first wall, and the two first exposed regions are respectively located at each of the two ends of the first insulating member. On the one hand, the arrangement allows the first wall to connect with the compression strip through the two first exposed regions, which is beneficial for further enhancing the connection strength between the housing and the compression strip. On the other hand, when the first exposed region and the compression strip are connected to each other, the interference effect with the first insulating member can be reduced, thereby lowering the assembly difficulty between the battery cell and the compression strip.

In some embodiments, the flange portion includes a first segment, a second segment, a third segment, and a fourth segment connected sequentially along the circumferential direction of the first wall. Along the first direction, the first segment is arranged opposite the third segment, and along the second direction, the second segment is arranged opposite the fourth segment, wherein the first direction, the second direction, and the thickness direction of the first wall are mutually perpendicular. The first insulating member is located between the first segment and the third segment in the first direction. The first segment, a portion of the second segment, a portion of the fourth segment, and one end of the first insulating member in the first direction are jointly enclosed to form one of the first hollow regions. The third segment, a portion of the second segment, a portion of the fourth segment, and the other end of the first insulating member in the first direction are jointly enclosed to form another one of the first hollow regions.

In the above technical solution, the flange portion is provided with a first segment, a second segment, a third segment, and a fourth segment that are connected sequentially along the circumferential direction of the first wall, where the first segment and the third segment are arranged opposite each other in the first direction, and the second segment and the fourth segment are arranged opposite each other in the second direction, making the flange portion a rectangular ring structure. By arranging the first insulating member between the first segment and the third segment in the first direction, the edges of both ends of the first insulating member in the first direction can respectively form two first hollow regions with the flange portion, where the structure is simple and easy to implement.

In some embodiments, the second wall and the side wall are an integrally molded structure, wherein, along the thickness direction of the first wall, one end of the side wall is connected to the second wall, and the other end encloses to form an opening. The first wall is an end cap to close the opening.

In the above technical solution, by configuring the second wall of the housing and the side wall as an integrally molded structure, with one end of the side wall away from the second wall forming an opening and the first wall closing the opening, the housing is assembled from two components. The structure of the housing facilitates covering the second insulating member of the insulating member over the outer surface of the integrally-formed second wall and side wall, which is beneficial for reducing the assembly difficulty of the battery cell.

In some embodiments, the battery cell further includes an electrode terminal; the electrode terminal is provided on the first wall and is electrically connected to the electrode assembly. The insulating member is provided with a mounting hole. The electrode terminal passes through the mounting hole, and the mounting hole is arranged at intervals with the first hollow region.

In the above technical solution, the electrode terminal is provided on the first wall, and the insulating member is provided with a mounting hole corresponding to the position of the electrode terminal, which allows the electrode terminal to pass through. By arranging the mounting hole and the first hollow region at intervals, on one hand, the first exposed region formed corresponding to the first hollow region on the first wall can be arranged at intervals with the electrode terminal, so as to reduce interference with the electrode terminal when the first exposed region is connected to external components; and on the other hand, it ensures that the insulating member is not communicated between the first hollow region and the mounting hole, thereby allowing the insulating member to be sleeved on the electrode terminal to enhance the connection reliability of the insulating member.

In some embodiments, a minimum distance between the first hollow region and the mounting hole is D₂, satisfying a condition: D₂ ≥ 0.5 mm.

In the above technical solution, by setting the minimum distance between the first hollow region and the mounting hole to be greater than or equal to 0.5 mm, the minimum dimension of a portion of the insulating member between the first hollow region and the mounting hole is greater than or equal to 0.5 mm, thereby alleviating the risk of fracture due to the dimension of the portion of the insulating member between the first hollow region and the mounting hole being too small.

In some embodiments, the insulating member is provided with two first hollow regions arranged along the first direction, so as to form two first exposed regions arranged along the first direction on the first wall. The first direction is perpendicular to the thickness direction of the first wall. The first wall is provided with two electrode terminals. The two electrode terminals are arranged along the first direction, and the two electrode terminals are located between the two first hollow regions. Along the first direction, the minimum distance between each first hollow region and the adjacent mounting hole is D₂.

In the above technical solution, the insulating member is provided with two first hollow regions arranged along the first direction; and two electrode terminals are arranged on the first wall along the first direction and are located between the two first hollow regions. This ensures that the minimum distance between the first hollow region and the adjacent mounting hole is D₂. Thus, by setting the minimum size of D₂, the risk of fracture occurring in the portion of the insulating member located in the first direction between the first exposed region and the electrode terminal during use can be reduced.

In some embodiments, the insulating member is provided with two first hollow regions arranged along the first direction, so as to form two first exposed regions arranged along the first direction on the first wall. The first direction is perpendicular to the thickness direction of the first wall. Along the first direction, the electrode terminal is located between the two first exposed regions.

In the above technical solution, where two first hollow regions are arranged along the first direction on the insulating member so as to form two first exposed regions on the first wall along the first direction, and the electrode terminal is arranged between the two first exposed regions, one the one hand, it can further enhance the connection strength between the first wall and the compression strip through the two first exposed regions; and on the other hand, by arranging the two first exposed regions on both sides of the electrode terminal, the difficulty of connecting the battery cell to the compression strip during grouping can be reduced.

In some embodiments, the housing further includes a second wall, where the second wall is arranged opposite the first wall along the thickness direction of the first wall. The battery cell further includes two electrode terminals, with the two electrode terminals provided on the first wall and the second wall respectively. The two electrode terminals are electrically connected to the electrode assembly.

In the above technical solution, by providing the two electrode terminals of the battery cell on the opposite first wall and second wall of the housing, the first wall can be provided with more space to form the first exposed region, and the difficulty of arranging the first hollow region of the insulating member can be reduced.

In some embodiments, the housing further includes a second wall, where the second wall is arranged opposite the first wall along the thickness direction of the first wall. The insulating member is further provided with a second hollow region; along the thickness direction of the first wall, the second hollow region is positioned on a side of the second wall that is away from the electrode assembly; the second wall forms a second exposed region at a position corresponding to the second hollow region; and the second exposed region is configured for connecting with a box.

In the above technical solution, where the first hollow region and the second hollow region are distributed and arranged at the positions of the insulating member corresponding to both sides of the first wall and the second wall, meaning that the insulating member is provided with the first hollow region and the second hollow region, which are respectively on the opposite sides of the housing along the thickness direction of the first wall, the first exposed region and the second exposed region are formed on the first wall and the second wall of the housing, respectively. This enables the first wall and the second wall of the housing to connect with the compression strip and the box respectively through the first exposed region and the second exposed region, enhances the structural stability of the battery cell when assembled into the box, and allows the housing to connect directly with the box, to reduce the phenomenon of easy detachment due to the indirect connection between the housing and the box through the insulating member.

In a second aspect, the embodiments of the present application also provide a battery, including the above-mentioned battery cell.

In some embodiments, the battery further includes a box and a compression strip, where both the compression strip and the battery cell are accommodated within the box, and the first exposed region is bonded to the compression strip.

In the above technical solution, the battery is provided with a box and a compression strip. By bonding the compression strip to the first exposed region of the housing of the battery cell, the battery cell is fixed within the box of the battery. The structure of the battery allows the housing of the battery cell to bond directly to the compression strip, which enables the housing to be connected indirectly to the compression strip without the need for an insulating member. This helps to reduce the impact of the insulating member on the bonding effectiveness between the battery cell and the compression strip and can effectively enhance the bonding strength, so as to reduce the phenomenon of easy detachment due to indirect bonding between the housing and the compression strip through the insulating member. Therefore, the structural stability of the battery cell when assembled into the box is enhanced, which lowers the risk of shaking or detachment of the battery cell during use and improves the assembly quality and usage stability of the battery.

In some embodiments, the battery includes multiple battery cells, and the compression strip bonds to the first exposed regions of the multiple battery cells.

In the above technical solution, the box is therein provided with multiple battery cells, and the compression strip is bonded to the first exposed regions of the multiple battery cells, thus connecting multiple battery cells into a single unit through the compression strip. It is beneficial for enhancing the structural strength and the structural stability of multiple battery cells within the box, further improving the usage stability of the battery.

In some embodiments, the housing further includes a second wall, where the second wall is arranged opposite the first wall along the thickness direction of the first wall. The insulating member is further provided with a second hollow region; along the thickness direction of the first wall, the second hollow region is positioned on a side of the second wall that is away from the electrode assembly; the second wall forms a second exposed region at a position corresponding to the second hollow region; and the second exposed region is bonded to the box.

In the above technical solution, by bonding the second exposed region of the housing of the battery cell to the box, the battery cell is further fixed within the box. The structure of the battery allows the housing of the battery cell to bond directly to the box, which enables the housing to be connected indirectly to the box without the need for an insulating member. This helps to reduce the impact of the insulating member on the bonding effectiveness between the battery cell and the box and can effectively enhance the bonding strength. Therefore, the structural stability of the battery cell when assembled into the box is enhanced, which lowers the risk of shaking or detachment of the battery cell during use and improves the assembly quality and usage stability of the battery.

In the third aspect, the embodiments of the present application further provide an electric device comprising the battery as described above.

### BRIEF DESCRIPTION OF DRAWINGS

To more clearly illustrate the technical solutions of the embodiments of the present application, the following will briefly introduce the drawings used in the embodiments. It should be understood that the following drawings only show some embodiments of the present application, and therefore they should not be regarded as a limitation on the scope. Those ordinary skilled in the art can also obtain other related drawings based on these drawings without inventive effort.
FIG. 1 is a schematic diagram of a structure of a vehicle provided in some embodiments of the present application;
FIG. 2 is a section view of the battery provided in some embodiments of the present application;
FIG. 3 is a schematic diagram of a structure of a battery cell provided in some embodiments of the present application;
FIG. 4 is a top view of a battery cell provided in some embodiments of the present application;
FIG. 5 is a schematic diagram of a structure of a battery cell (after removing an insulating member) provided in some embodiments of the present application;
FIG. 6 is a schematic diagram of a structure of a first insulating member of a battery cell provided in some embodiments of the present application;
FIG. 7 is a schematic diagram of a structure of a battery cell provided in some embodiments of the present application;
FIG. 8 is a top view of the battery cell provided in other embodiments of the present application;
FIG. 9 is a schematic diagram of a structure of a battery cell (after removing a first insulating member) provided in some embodiments of the present application;
FIG. 10 is a schematic diagram of a structure of a first insulating member of a battery cell provided in some embodiments of the present application; and
FIG. 11 is an upward view of a battery cell provided in some embodiments of the present application.

Reference numerals: 1000- vehicle; 100- battery; 10- box; 11- first box body; 12- second box body; 20- battery cell; 21- housing; 211- first wall; 2111- first exposed region; 212- second wall; 2121- second exposed region; 213- side wall; 2131- opening; 22- electrode assembly; 23-insulating member; 231- first hollow region; 232- avoidance opening; 233- first insulating member; 234- second insulating member; 2341- flange portion; 2341a- first segment; 2341b-second segment; 2341c-third segment; 2341d-fourth segment; 235-mounting hole; 236- second hollow region; 24- pressure relief mechanism; 25- electrode terminal; 30- compression strip; 200-controller 300- motor; X- thickness direction of the first wall; Y- first direction; Z- second direction.

### DETAILED DESCRIPTION OF EMBODIMENTS

In order to make the objective, technical solution, and advantages of the embodiments of the present application clearer, the following will provide a clear and complete description of the technical solution in the embodiments of the present application, in conjunction with the drawings in the embodiments of the present application. Obviously, the described embodiments are only a part of the embodiments of the present application, rather than all embodiments. Based on the embodiments in the present application, all other embodiments obtained by those of ordinary skill in the art without making inventive efforts are within the scope of protection of the present application.

Unless otherwise defined, all technical and scientific terms used herein have the same meaning as understood by those skilled in the art of the relevant technical field. The terms used in the summary of the present application are used for the purpose of describing specific embodiments and are not intended to limit the present application. The terms, "comprise", "provide" and their variations, and any other variations, are intended to cover non-exclusive inclusion in the summary, the claims, and the above drawings of the present application. The terms "first", "second", and so on in the summary and claims of the present application or in the above drawings are used to distinguish between different objects and are not intended to describe a specific sequence or hierarchy.

The term "embodiment" used in the present application means that specific features, structures, or characteristics described in conjunction with the embodiments can be included in at least one embodiment of the present application. The use of the phrase in various parts of the summary does not necessarily refer to the same embodiment, nor does it imply that these embodiments are mutually exclusive or independent of each other.

In the description of the present application, it should be noted that, unless otherwise clearly stipulated and limited, the terms "provide", "interconnect", "connect", and "attach" should be understood in a broad sense. For example, it can be a fixed connection, a detachable connection, or an integral connection; and it can be a direct connection, an indirect connection through an intermediary, or an internal communication between two components. Those of ordinary skill in the art can understand the meanings of the above terms in the present application according to specific situations.

In the present application, the term "and/or" is used as a way to describe the relationship between associated objects, indicating that there can be three possible relationships. For example, "A and/or B" can represent: the presence of A, the presence of both A and B, or the presence of B. Additionally, the character "/" in the present application generally represents an "or" relationship between the preceding and following associated objects.

In the embodiments of the present application, identical reference numerals indicate the same components. For the sake of conciseness, detailed explanations of the same components are omitted in different embodiments. It should be understood that the dimensions such as thickness, length, and width of various components in the embodiments of the present application as shown in the drawings, and the overall dimensions such as thickness, length, and width of the integrated device, are provided as illustrative examples and should not be construed to limit the scope of the present application.

In the present application, the term "multiple" refers to two or more (including two).

In the embodiment of the present application, the battery cell can be a secondary battery, where the secondary battery refers to a battery cell that can be recharged to activate the active material and continue to be used after the battery cell has been discharged.

The battery cell can include lithium-ion batteries, sodium-ion batteries, sodium-lithium-ion batteries, lithium metal batteries, sodium metal batteries, lithium-sulfur batteries, magnesium-ion batteries, nickel-metal hydride batteries, nickel-cadmium batteries, lead-acid batteries, etc. The embodiment of the present application is not limited herein.

The battery cell generally includes an electrode assembly. The electrode assembly includes a positive electrode, a negative electrode, and a separator. During the charge and discharge process of the battery cell, active ions (such as lithium ions) are embedded and extracted back and forth between the positive electrode and the negative electrode. The separator is arranged between the positive electrode and the negative electrode, which can prevent short circuits between the positive and negative electrodes and allow active ions to pass through.

In some embodiments, the positive electrode can be a positive electrode sheet, and the positive electrode sheet can include a positive electrode current collector and positive electrode active material arranged on at least one surface of the positive electrode current collector.

As an example, the positive electrode current collector comprises two surfaces opposite each other in its thickness direction, and the positive electrode active material is provided on either or both of the two surfaces opposite the positive electrode current collector.

As an example, the positive electrode current collector can be made of a metal foil or composite current collector. For instance, as a metal foil, materials such as aluminum or stainless steel with silver surface treatment, stainless steel, copper, aluminum, nickel, carbon electrode, carbon, nickel, or titanium can be used. The composite current collector can include a polymer material base layer and a metal layer. The composite current collector can be formed by forming metallic materials (aluminum, aluminum alloys, nickel, nickel alloys, titanium, titanium alloys, silver and silver alloys, etc.) onto a base material of polymeric material (e.g., substrates of polypropylene, polyethylene terephthalate, polybutylene terephthalate, polystyrene, polyethylene, etc.).

As an example, the positive electrode active material can comprise at least one of the following materials: a lithium-containing phosphate, a lithium transition metal oxide, and respective modified compounds thereof. However, the present application is not limited to these materials, and other conventional materials that can be utilized as positive electrode active material for battery cathodes can also be used. These positive electrode active materials can be used in only one alone or in a combination of more than two. The examples of lithium-containing phosphate can comprise, but are not limited to, at least one of a composite of lithium iron phosphate (e.g., LiFePO₄, also referred to as LFP), lithium iron phosphate, and carbon; a composite of lithium manganese phosphate (e.g., LiMnPO₄), lithium manganese phosphate, and carbon; and a composite of lithium ferromanganese phosphate, lithium manganese iron phosphate, and carbon.

In some embodiments, the negative electrode can be a negative electrode sheet, and the negative electrode sheet can include a negative electrode current collector.

For example, the negative electrode current collector can be made of a metal foil, foam metal, or composite current collector. For instance, as a metal foil, materials such as aluminum or stainless steel with silver surface treatment, stainless steel, copper, aluminum, nickel, carbon electrode, carbon, nickel, or titanium can be used. Foam metals can be nickel foam, copper foam, aluminum foam, foam alloys, or carbon foam. The composite current collector can include a polymer material base layer and a metal layer. The composite current collector can be formed by forming metallic materials (copper, copper alloys, nickel, nickel alloys, titanium, titanium alloys, silver and silver alloys, etc.) onto a base material of polymeric material (e.g., substrates of polypropylene, polyethylene terephthalate, polybutylene terephthalate, polystyrene, polyethylene, etc.).

As an example, the negative electrode sheet can include a negative electrode current collector and a negative electrode active material provided on at least one surface of the negative electrode current collector.

As an example, the negative electrode current collector comprises two surfaces opposite each other in its thickness direction, and the negative electrode active material is provided on either or both of the two surfaces opposite the negative electrode current collector.

As an example, the negative electrode active material can be a negative electrode active material known in the art for use in the battery cells. As an example, the negative electrode active material can comprise at least one of the following materials: artificial graphite, natural graphite, soft carbon, hard carbon, silicon-based materials, tin-based materials, and lithium titanate.

In some embodiments, the material of the positive electrode current collector can be aluminum and the material of the negative electrode current collector can be copper.

In some implementations, the electrode assembly further comprises an isolation member, and the isolation member is provided between the positive electrode and the negative electrode.

In some embodiments, the isolation member is a separator. The present application does not impose specific restrictions on the type of separator and allows for the selection of any well-known porous structure separator with good chemical and mechanical stability.

As an example, the main material of the separator can be selected from at least one of glass fiber, nonwoven fabric, polyethylene, polypropylene, polyvinylidene fluoride, and ceramic.

In some embodiments, the isolation member is a solid electrolyte. The solid electrolyte is arranged between the positive electrode and the negative electrode and serves both to transport ions and to isolate the positive and negative electrodes.

In some embodiments, the battery cell also includes an electrolyte, and the electrolyte conducts ions between the positive and negative electrodes. The present application does not impose specific restrictions on the type of electrolyte and allows for selection based on requirements. The electrolyte can be in a liquid state, gel state, or solid state.

In some embodiments, the electrode assembly is of a wound structure. The positive electrode sheet and the negative electrode sheet are wound into a wound structure.

In some embodiments, the electrode assembly is of a stacked structure.

In some embodiments, the electrode assembly can have shapes such as cylindrical, flat, or prismatic.

In some embodiments, the electrode assembly is provided with a tab, and the tab can conduct current out from the electrode assembly. The tab includes a positive tab and a negative tab.

In some embodiments, the battery cell can include a housing. The housing is configured to encapsulate the electrode assembly, electrolyte, and other components. The housing can be made of materials such as steel, aluminum, plastic (e.g., polypropylene), composite metal (e.g., copper-aluminum composite housing), or aluminum-plastic film.

As an example, the battery cell can be cylindrical battery cells, prismatic battery cells, soft pouch battery cells, or battery cells of other shapes. The prismatic cells include square battery cells, blade battery cells, and multi-prismatic battery cells; and the multi-prismatic battery cells can be, for example, hexagonal battery cells. The present application is not particularly limited herein.

The batteries mentioned in the embodiments of the present application refer to a single physical module that comprises one or multiple battery cells to provide higher voltage and capacity.

In some embodiments, the battery can be a battery module. When multiple battery cells are provided, the multiple battery cells are arranged and fixed to form a module.

In some embodiments, the battery can be a battery pack, and the battery pack includes a box and a battery cell, wherein the battery cell or the battery module is housed within the box.

In some embodiments, the box can be of a portion of the chassis structure of the vehicle. For instance, a portion of the box can be at least a portion of the floor of the vehicle, or a portion of the box can be at least a portion of the crossbeam and longitudinal beam of the vehicle.

In some embodiments, the battery can be an energy storage device. The energy storage device includes storage containers, energy storage cabinets, and the like.

Batteries have prominent advantages such as high energy density, low environmental pollution, high power density, long service life, broad applicability, and low self-discharge coefficient. They are an important component of the current development of new energy sources.

For a general battery cell, the housing of the battery cell usually includes a shell and an end cap, with the end cap covering the opening of the shell. To facilitate the assembly of the battery cell, the electrode terminal is typically assembled onto the end cap of the battery cell so that when the end cap is covered on the shell, the electrode terminal, the current collector member, and the tab can be stacked and welded to the tab to each other; and this achieves an electrical connection between the electrode terminal and the electrode assembly. Therefore, the electrode terminal serves as the output terminal of the battery cell to enable the input or output of electrical energy of the battery cell; and finally, the end cap is then attached to the shell.

The inventors have discovered that a battery typically contains multiple battery cells, and the multiple battery cells are arranged in groups within the box of the battery. To reduce the risk of short circuits among the multiple battery cells, a blue film is often applied on the outer side of the shell of the housing, and a top cover patch is arranged on the end cap of the housing, thus ensuring insulation and isolation between a battery cell and other battery cells. When assembling multiple battery cells into a group, to reduce the risk of the multiple battery cells shifting within the box, it is common to adhere the shell of the battery cell to the box and to arrange a compression strip inside the box of the battery. Additionally, structural adhesive is applied to the end cap of the housing of each battery cell. By bonding the compression strip to the end caps of multiple battery cells, the multiple battery cells can be assembled into a single unit. This increases the overall structural strength of the assembled group of multiple battery cells, thereby enhancing the stability and reliability of the battery during use. However, in the battery cell with the structure, when stacked into a group, the structural adhesive is blocked by the top cover patch, resulting in the compression strip not being bonded directly to the end cap. Therefore, a top cover patch is arranged between the compression strip and the end cap, causing the compression strip and the end cap to be indirectly-bonded structures through the top cover patch. Since the connection strength between the top cover patch and the end cap cannot meet the connection strength of the compression strip bonding on the battery cell, in the process of assembling multiple battery cells into a group, the bonding between the battery cell and the compression strip could be unreliable. Moreover, during use, the pulling effect of the compression strip can cause the top cover patch to detach from the end cap, resulting in the separation of the compression strip from the battery cell. This, in turn, leads to poorer assembly quality and usage stability of the battery.

Based on the above considerations, in order to solve the problem of poor assembly quality and usage stability of the battery, the inventor, after in-depth research, designed a battery cell, wherein the battery cell includes a housing, an electrode assembly, and an insulating member. The housing includes a first wall. The electrode assembly is housed within the housing. The insulating member is covered on an outer side of the housing and covers an outer surface of the first wall that is away from the electrode assembly in a thickness direction of the first wall. The insulating member is further provided with a first hollow region; along the thickness direction of the first wall, the first hollow region is positioned on a side of the first wall that is away from the electrode assembly; the first wall forms a first exposed region at a position corresponding to the first hollow region; and the first exposed region is configured for connecting with a compression strip.

In the battery cell with the structure, the outer surface of the housing is covered with an insulating member, which allows the insulating member to insulate and isolate the housing of the battery cell from the external environment, thereby reducing the risk of short circuits during the use of the battery cell. By arranging the first hollow region at the position corresponding to one side of the first wall of the insulating member, a first exposed region is formed on the first wall of the housing, enabling the battery cell to connect with the compression strip through the first exposed region. Therefore, when the battery cell is assembled into a battery, the compression strip can connect directly with the housing, which enables the housing to be connected indirectly to the compression strip without the need for an insulating member. This helps to reduce the impact of the insulating member on the connection effectiveness between the battery cell and the compression strip and can effectively enhance the connection strength, so as to reduce the phenomenon of easy detachment due to indirect connections between the housing and the compression strip through the insulating member. Therefore, while achieving an insulation effect between the battery cell and the external environment, the assembly quality of the battery cell during grouping can be improved, thus benefiting the assembly quality and stability of the battery comprising the battery cells.

The battery cell disclosed in the embodiments of the present application can be used in various electric devices, including but not limited to vehicles, ships, or aircraft. A power system of the electrical device can be constructed using the battery cell, the battery, and other components disclosed in the present application. In this way, it is helpful to alleviate the problem that the battery cells are not securely assembled in the process of assembling multiple battery cells into a group, so as to improve the assembly quality and use stability of the battery.

The embodiments of the present application provide an electric device that uses batteries as a power source. The electric device can comprise, but is not limited to, mobile phones, tablets, laptops, electric toys, power tools, electric bicycles, electric cars, boats, spacecraft, and more. The electric toys can include stationary or mobile electric toys, for example, video game consoles, electric car toys, electric boat toys, and electric airplane toys. The spacecraft can include aircraft, rockets, space shuttles, and spacecraft, among others.

For ease of explanation, the following embodiment will be described using one embodiment of the present application where the electric device is a vehicle 1000 as an example.

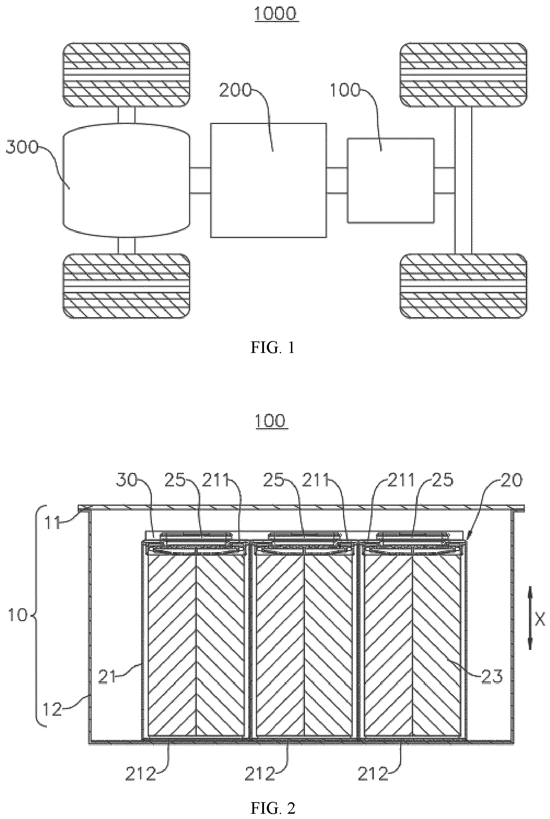

Referring to FIG. 1, FIG. 1 is a schematic diagram of a structure of a vehicle 1000 provided in some embodiments of the present application. The vehicle 1000 can be a gasoline-powered car, a natural gas car, or a new energy vehicle. The new energy vehicles can be pure electric cars, hybrid cars, extended-range cars, and so on. The vehicle 1000 is therein provided with a battery 100, and the battery 100 can be provided at the bottom of the vehicle 1000, at the head of the vehicle 1000, or at the rear of the vehicle 1000. The battery 100 is configured to provide power for the vehicle 1000. For instance, the battery 100 can serve as an operational power source or a power source for the use of the vehicle 1000. Additionally, the vehicle 1000 also comprises a controller 200 and a motor 300. The controller 200 is configured to manage the supply of power from the battery 100 to the motor 300, for example, for working power requirements for starting, navigating, and driving the vehicle 1000.

In some embodiments of the present application, the battery 100 serves not only as the operational power source or the power source for use of the vehicle 1000 but also as the driving power source for the vehicle 1000. It can replace or partially substitute for conventional fuels like gasoline or natural gas to provide driving propulsion for the vehicle 1000.

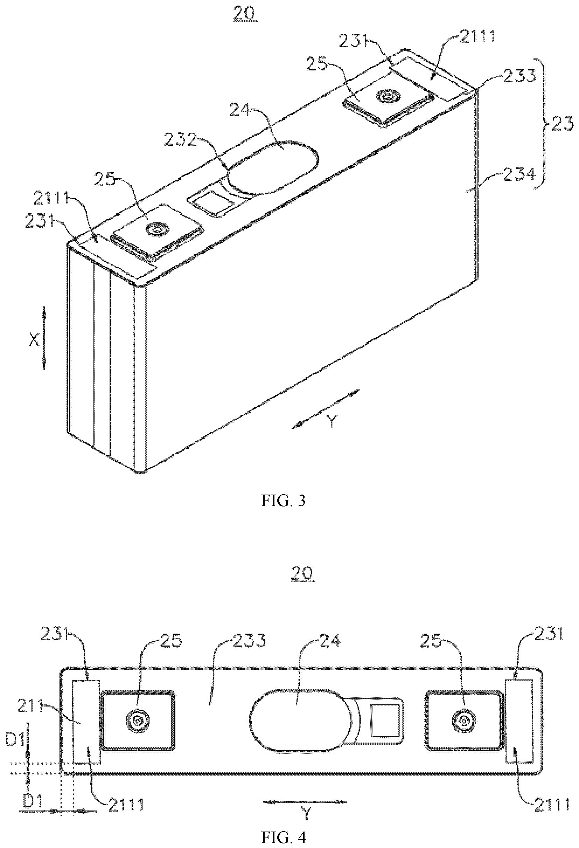

Referring to FIGS. 2 and 3, FIG. 2 is a section view of a battery 100 provided in some embodiments of the present application, and FIG. 3 is a structural schematic diagram of a battery cell 20 provided in some embodiments of the present application. The battery 100 comprises a box 10 and a battery cell 20, wherein the box 20 is configured to contain the battery cell 10.

The box 10 is configured to provide an assembly space for the battery cell 20, and the box 10 can be of various structures. In some embodiments, the box 10 can comprise a first box body 11 and a second box body 12, wherein the first box bod 11 and the second box body 12 are caped together. The first box body 11 and the second box body 12 collectively define an assembly space configured for accommodating the battery cell 20. The second box body 12 can be a hollow structure open at one end, and the first box body 11 can be a plate-like structure. The first box body 11 is capped over an open side of the second box body 12 so that the first box body 11 and the second box body 12 together define an assembly space. Or, both the first box body 11 and the second box body 12 can be hollow structures open at one end, and an open side of the first box body 11 is capped over an open side of the second box body 12. Of course, the box 10 formed by the first box body 11 and the second box body 12 can be of a variety of shapes, such as cylindrical or rectangular. Exemplarily, in FIG. 2, the box 10 is rectangular in shape.

In the battery 100, one or multiple battery cells 20 can be provided inside the box 10. When multiple battery cells 20 are provided in the box 10, the multiple battery cells 20 can be connected in series, parallel, or hybrid. A hybrid connection refers to having both series and parallel connections among multiple battery cells 20. The multiple battery cells 20 can be directly connected in series, parallel, or hybrid. Then, the whole comprising the multiple battery cells 20 is housed in the box 10. Of course, the battery 100 can also be in the form that, the multiple battery cells 20 are first connected in series, parallel, or hybrid to form battery modules, and then the multiple battery modules are connected in series, parallel, or hybrid to be formed into a whole, which is then accommodated within the box 10. The battery 100 can also include other structures. For example, the battery 100 can also include a busbar component, and the busbar component is configured for connecting multiple battery cells 20, so as to achieve electrical connections between the multiple battery cells 20.

Each battery cell 20 can be a secondary battery or a primary battery; and it can also be a lithium-sulfur battery, sodium-ion battery, magnesium-ion battery, or other types, but is not limited herein. The battery cell 20 can have various shapes such as cylindrical, flat, rectangular, or other shapes. Exemplarily, in FIG. 3, the battery cell 20 is of a cylindrical structure.

In some embodiments, as shown in FIG. 2, the battery 100 can also include a compression strip 30. The battery 100 includes multiple battery cells 20, with the compression strip 30 arranged inside the box 10. The compression strip 30 is configured to connect to the multiple battery cells 20, thus fastening the multiple battery cells 20 into a single unit. This helps to reduce the occurrence of shaking or collisions among the multiple battery cells 20 within the box 10.

As an example, in FIG. 2, one end of the battery cell 20 in the thickness direction X of the first wall is bonded to the bottom of the box 10, meaning that one end of the battery cell 20 in the thickness direction X of the first wall is bonded to the bottom surface of the second box body 12 facing the first box body 11, and the other end is bonded to the compression strip 30. The compression strip 30 is bonded to multiple battery cells 20, thus enabling the multiple battery cells 20 housed inside the box 10 to form a single unit. This improves the overall structural strength of the battery 100, so as to reduce the risk of the battery cells 20 shaking or colliding with each other during use.

It should be noted that the battery cell 20 can be placed in the box 10 upright or upside-down. When the battery cells 20 are placed upright in the box 10, the bottoms of the battery cells 20 are typically bonded to the bottom of the box 10, and the compression strip 30 is bonded to the top of the battery cells 20. When the battery cells 20 are placed upside-down in the box 10, the tops of the battery cells 20 are typically bonded to the top of the box 10, and the compression strip 30 is bonded to the bottoms of the battery cells 20. Exemplarily, in FIG. 2, the battery cells 20 are placed upright in the box 10.

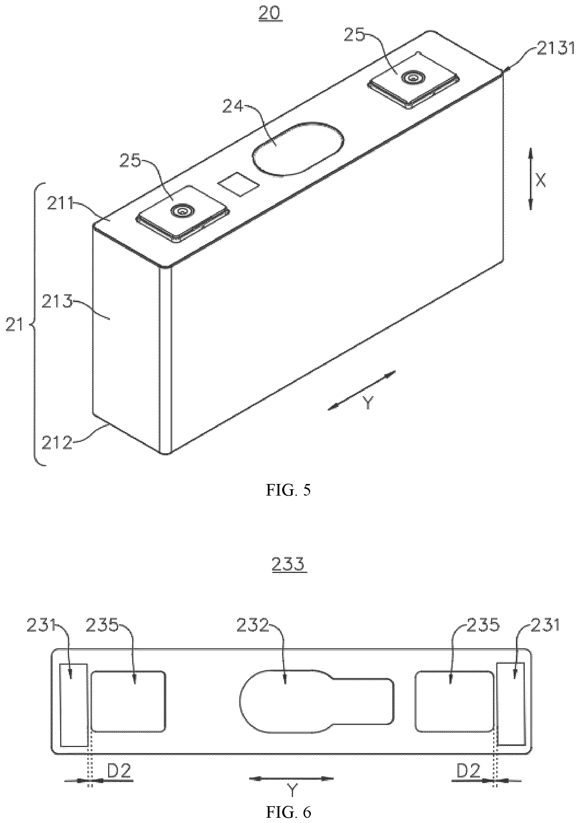

According to some embodiments of the present application, with reference to FIGS. 2 and 3, and with further reference to FIGS. 4 and 5, FIG. 4 is a top view of a battery cell 20 provided in some embodiments of the present application; and FIG. 5 is a schematic diagram of a structure of a battery cell 20 (after removing an insulating member 23) provided in some embodiments of the present application. The present application provides a battery cell 20, wherein the battery cell 20 includes a housing 21, an electrode assembly 22, and an insulating member 23. The housing 21 includes a first wall 211. The electrode assembly 22 is housed within the housing 21. The insulating member 23 is covered on an outer side of the housing 21 and covers an outer surface of the first wall 211 which is away from the electrode assembly 22 in a thickness direction X of the first wall. The insulating member 23 is further provided with a first hollow region 231; along the thickness direction X of the first wall, the first hollow region 231 is positioned on a side of the first wall 211 that is away from the electrode assembly 22; the first wall 211 forms a first exposed region 2111 at a position corresponding to the first hollow region 231; and the first exposed region 2111 is configured for connecting with a compression strip 30.

The housing 21 can also be configured to contain an electrolyte, such as an electrolytic solution. The housing 21 can be of various structural forms, such as cylinder or cuboid. Similarly, the material of the housing 21 can also be diverse, including copper, iron, aluminum, steel, aluminum alloy, and more.

In some embodiments, the housing 21 can further include a second wall 212 and a side wall 213. The second wall 212 is arranged opposite to the first wall 211 in the thickness direction X of the first wall. The side wall 213 surrounds the second wall 212. The side wall 213 and the second wall 212 are integrally molded, so that one end of the side wall 213 is connected to the second wall 212, and the other end encloses an opening 2131 opposite the second wall 212. In other words, the side wall 213 and the second wall 212 together form a shell with an accommodating cavity. The accommodating cavity is configured for housing the electrode assembly 22 and the accommodating cavity is provided with the opening 2131. In other words, the side wall 213 and the second wall 212 form a hollow structure with the opening 2131 at one end. The first wall 211 covers the opening 2131 of the side wall 213, meaning that the first wall 211 is the end cap of the housing 21 configured for sealing the opening 2131. The first wall 211 covers the opening 2131 of the side wall 213 to form a hermetical connection, thus forming a sealed space configured for accommodating the electrode assembly 22 and the electrolyte. In other words, the first exposed region 2111 is formed on the end cap of the housing 21.

It should be noted that, in other embodiments, the side wall 213 can also be integrally molded with the first wall 211. Correspondingly, the second wall 212 is the end cap that seals the opening 2131, meaning that the first exposed region 2111 is formed on the bottom wall, opposite to the end cap, of the shell of the housing 21. Of course, understandably, the housing 21 is not limited to the above structure, and the housing 21 can also be other structures. For example, the housing 21 can include a separately arranged first wall 211, second wall 212, and side wall 213. The side wall 213 encloses and forms a hollow structure with two opposing openings 2131. The first wall 211 and the second wall 212 are respectively covered over one of the openings 2131 of the side wall 213, thus forming hermetical connections. This forms a sealed space configured for accommodating the electrode assembly 22 and the electrolyte.

During the assembly of the battery cell 20, the electrode assembly 22 can first be placed into the shell formed by the side wall 213 and the second wall 212, and then electrolyte can be filled into the shell, after which the first wall 211 is capped over the opening 2131 of the shell to complete the assembly of the battery cell 20.

The housing 21 can have various shapes, such as a cylindrical structure, a rectangular cuboid, or a prismatic structure. The shape of the housing 21 can be determined based on the specific shape of the electrode assembly 22. For example, if the electrode assembly 22 is of a cylindrical structure, the housing 21 of a cylindrical structure can be selected; if the electrode assembly 22 is of a rectangular structure, the housing 21 of a rectangular structure can be selected. Exemplarily, in FIG. 3, the housing 21 is of a cylindrical structure.

It should be noted that the electrode assembly 22 is a component within the battery cell 20 where electrochemical reactions occur. The electrode assembly 22 can include a positive electrode sheet, a negative electrode sheet, and a separator. The structure of the electrode assembly 22 can be various. For example, the electrode assembly 22 can be a wound structure formed by winding a positive electrode sheet, a separator, and a negative electrode sheet; or a layered structure formed by layering a positive electrode sheet, a separator, and a negative electrode sheet. Similarly, one or multiple electrode assemblies 22 can be accommodated within the housing 21. Exemplarily, in FIG. 2, two electrode assemblies 22 are provided, and the two electrode assemblies 22 are arranged in a stacking manner along their thickness directions.

The insulating member 23 is covered on an outer side of the housing 21 and covers an outer surface of the first wall 211 which is away from the electrode assembly 22 in a thickness direction X of the first wall. In other words, the insulating member 23 is wrapped around the entire outer surface of the housing 21 such that the first wall 211 of the housing 21 is covered by the insulating member 23.

Exemplarily, the material of the insulating member 23 can be varied, such as rubber, silicone, or rubber. Exemplarily, the insulating member 23 is bonded to the outer surface of the housing 21.

The first wall 211 forms a first exposed region 2111 at the location corresponding to the first hollow region 231, meaning that the insulating member 23 is provided with the first hollow region 231 so as to allow the first wall 211 of the housing 21 to have a region that is avoided by the first hollow region 231. Therefore, a first exposed region 2111 on the first wall 211, which is not covered by the insulating member 23, is formed.

Optionally, one or more first hollow regions 231 can be provided on the insulating member 23. Exemplarily, in FIG. 4, the insulating member 23 is provided with two first hollow regions 231. The two first hollow regions 231 are arranged at intervals along the first direction Y, thus forming two first exposed regions 2111 that are arranged at intervals along the first direction Y on the first wall 211. The first direction Y is perpendicular to the thickness direction X of the first wall, which increases the bonding strength between the first wall 211 and the compression strip 30. Of course, in other embodiments, the number of first hollow regions 231 can also be one, three, four or five, etc.

Exemplarily, the first hollow region 231 is rectangular, and correspondingly, the first exposed region 2111 formed on the first wall 211 is also rectangular. In other embodiments, the first hollow region 231 can be of various shapes, such as triangular, pentagonal, circular, or elliptical.

It should be noted that the first exposed region 2111 is configured for connection with the compression strip 30, and the connection method between the first exposed region 2111 and the compression strip 30 can be diverse, such as bonding or welding. Exemplarily, in the embodiments of the present application, the first exposed region 2111 is configured for bonding with the compression strip 30.

In some embodiments, as shown in FIG. 5, the battery cell 20 can also include a pressure relief mechanism 24, wherein the pressure relief mechanism 24 is mounted on the housing 21. The pressure relief mechanism 24 is configured to release the internal pressure of the battery cell 20 when the internal pressure or the temperature of the battery cell 20 reaches a predetermined value.

Optionally, the pressure relief mechanism 24 can be arranged on the first wall 211 of the housing 21, on the second wall 212 of the housing 21, or on the side wall 213 of the housing 21. Exemplarily, in FIGS. 3 and 5, the pressure relief mechanism 24 is arranged on the first wall 211. Correspondingly, the insulating member 23 is provided with an avoidance opening 232 configured to avoid the pressure relief mechanism 24, thus allowing the pressure relief mechanism 24 to discharge the internal pressure of the battery cell 20.

Exemplarily, the pressure relief mechanism 24 can be various pressure relief components such as explosion-proof valves, burst discs, gas valves, relief valves, or safety valves.

The outer surface of the housing 21 is covered with an insulating member 23, which allows the insulating member 23 to insulate and isolate the housing 21 of the battery cell 20 from the external environment, thereby reducing the risk of short circuits during the use of the battery cell 20. By arranging the first hollow region 231 at the position corresponding to one side of the first wall 211 of the insulating member 23, a first exposed region 2111 is formed on the first wall 211 of the housing 21, enabling the battery cell 20 to connect with the compression strip 30 through the first exposed region 2111. Therefore, when the battery cell 20 is assembled into a battery 100, the compression strip 30 can connect directly with the housing 21, which enables the housing 21 to be connected indirectly to the compression strip 30 without the need for an insulating member 23. This helps to reduce the impact of the insulating member 23 on the connection effectiveness between the battery cell 20 and the compression strip 30 and can effectively enhance the connection strength, so as to reduce the phenomenon of easy detachment due to indirect connections between the housing 21 and the compression strip 30 through the insulating member 23. Therefore, while achieving an insulation effect between the battery cell 20 and the external environment, the assembly quality of the battery cell 20 during grouping can be improved, thus benefiting the assembly quality and stability of the battery 100 comprising the battery cells 20.

According to some embodiments of the present application, with reference to FIG. 4, an area of the first exposed region 2111 is S, satisfying a condition: S≥50mm². In other words, the area of the region on the first wall 211 corresponding to a first hollow region 231 that is not covered by the insulating member 23 is greater than or equal to 50 mm².

By setting the area of the first exposed region 2111 of the first wall 211, which is configured for connecting with the compression strip 30, to be greater than or equal to 50 mm², sufficient area is ensured for mutual connection between the first wall 211 and the compression strip 30. This facilitates an increase in the connection area between the first wall 211 and the compression strip 30, thereby enhancing the connection strength.

According to some embodiments of the present application, with reference to FIG. 4, a minimum distance between the first exposed region 2111 and an edge of the first wall 211 is D₁, satisfying a condition: 1 mm ≤ D₁ ≤ 5 mm.

By setting the minimum distance between the first exposed region 2111 and the edge of the first wall 211 to be between 1 mm and 5 mm, the minimum distance between the first hollow region 231 arranged on the insulating member 23 and the edge of the first wall 211 is from 1 mm to 5 mm. On the one hand, it can alleviate the phenomenon where the distance between the first hollow region 231 and the edge of the first wall 211 is too small, which makes it difficult to manufacture the first hollow region 231; thus, the difficulty of manufacturing the battery cells 20 is reduced. On the other hand, it can alleviate the phenomenon of excessive insulating member 23 covering the first wall 211 due to the large distance between the first hollow region 231 and the edge of the first wall 211, which results in a smaller area of the first exposed region 2111 formed on the first wall 211.

According to some embodiments of the present application, with reference to FIG. 3 and FIG. 5, The housing 21 further includes a second wall 212 and a side wall 213. Along the thickness direction X of the first wall, the second wall 212 is arranged opposite to the first wall 211, and the side wall 213 is arranged around the first wall 211 and the second wall 212. The insulating member 23 includes a first insulating member 233 and a second insulating member 234 that are separately provided, wherein the first insulating member 233 covers an outer surface of the first wall 211 away from the electrode assembly 22, and the second insulating member 234 covers an outer surface of the second wall 212 away from the electrode assembly 22 and the outer surface of the side wall 213 away from the electrode assembly 22.

Along the thickness direction X of the first wall, the second wall 212 is arranged opposite to the first wall 211, and the side wall 213 is arranged around the first wall 211 and the second wall 212. In other words, the first wall 211 and the second wall 212 are arranged at intervals along the thickness direction X of the first wall and are respectively arranged at the two ends of the side wall 213. The side wall 213 is arranged around the circumference of the first wall 211 along the circumferential direction of the first wall 211 and around the circumference of the second wall 212 along the circumferential direction of the second wall 212. It should be noted that the structure of the housing 21 can be of various types, such as a structure where the first wall 211, the second wall 212, and the side wall 213 are all separate structures; it can also be a structure where the second wall 212 and the side wall 213 are integrally molded, with the first wall 211 connected to the end of the side wall 213 that is far from the first wall 211; or it can be a structure where the first wall 211 and the side wall 213 are integrally molded, with the second wall 212 connected to the end of the side wall 213 that is far from the second wall 212.

The first insulating member 233 covers the outer surface of the first wall 211 away from the electrode assembly 22, meaning that the first insulating member 233 is arranged on the first wall 211 and is located on the side of the first wall 211 away from the interior of the battery cell 20.

The second insulating member 234 covers the outer surface of the second wall 212 away from the electrode assembly 22 and the outer surface of the side wall 213 away from the electrode assembly 22, meaning that the second insulating member 234 is arranged on the shell formed by enclosing the second wall 212 and the side wall 213 and is located on the side of the shell away from the interior of the battery cell 20.

By providing the insulating member as a separately arranged first insulating member 233 and second insulating member 234, where the first insulating member 233 is a structure that covers the first wall 211 and the second insulating member 234 is a structure that covers the side wall 213 and the second wall 212, the first insulating member 233 and the second insulating member 234 of the insulating member 23 correspond to the first wall 211 of the housing 21 and the second wall 212 and the side wall 213 of the housing 21, respectively. This facilitates a reduction in the assembly difficulty between the insulating member 23 and the housing 21.

According to some embodiments of the present application, with reference to FIG. 3, FIG. 4, and FIG. 5, and with further reference to FIG. 6, FIG. 6 is a schematic diagram of a structure of a first insulating member 233 of a battery cell 20 provided in some embodiments of the present application. The first hollow region 231 is provided on the first insulating member 233.

The first hollowed region 231 is a through-hole structure provided on the first insulating member 233. The first hollowed region 231 penetrates the first insulating member 233 along the thickness direction X of the first wall, thereby forming the first exposed region 2111 on the first wall 211.

It should be noted that, in the embodiment where the minimum distance D₁ between the first exposed region 2111 and the edge of the first wall 211 is from 1mm to 5mm, since the first insulating member 233 covers the surface of the first wall 211 away from the electrode assembly 22, and the first hollowed region 231 is arranged on the first insulating member 233, the minimum distance D₁ between the first exposed region 2111 and the edge of the first wall 211 is the minimum distance between the first hollowed region 231 and the edge of the first insulating member 233. That is, the minimum distance between the first hollowed region 231 and the edge of the first insulating member 233 is from 1mm to 5mm.

By separately providing the first hollow region 231 on the first insulating member 233 to form a first exposed region 2111 on the first wall 211, the structure of the insulating member 23 is simple, facilitating processing and manufacturing, and ensuring that the first hollow region 231 and the second insulating member 234 do not affect each other, which is beneficial for reducing the assembly difficulty of the battery cell 20.

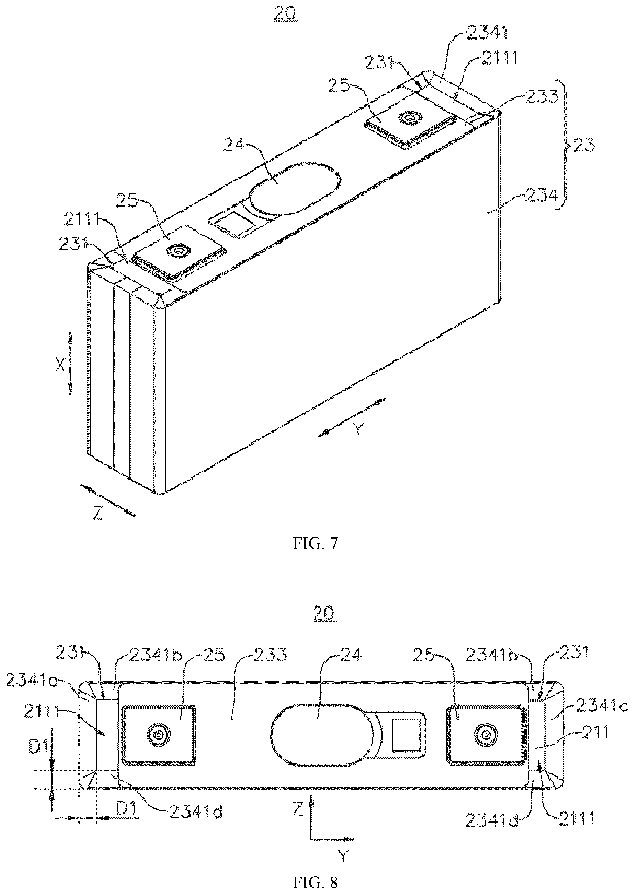

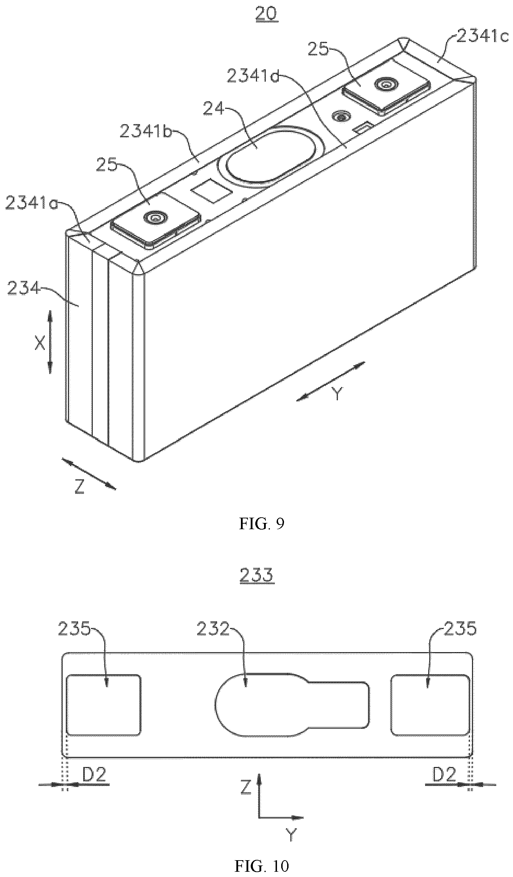

According to some embodiments of the present application, with reference FIG. 7, FIG. 8, and FIG. 9, FIG. 7 is a schematic diagram of a structure of a battery cell 20 provided in some embodiments of the present application; FIG. 8 is a top view of a battery cell 20 provided in other embodiments of the present application; and FIG. 9 is a schematic diagram of a structure of a battery cell 20 (after removing a first insulating member 233) provided in some embodiments of the present application. The second insulating member 234 is provided with a flange portion 2341, wherein the flange portion 2341 is arranged along a circumferential direction of the first wall 211 and is located on a side of the first wall 211 away from the electrode assembly 22. The flange portion 2341 and the edge of the first insulating member 233 jointly enclose to form the first hollow region 231.

The second insulating member 234 is provided with a flange portion 2341, and the flange portion 2341 is arranged along a circumferential direction of the first wall 211 and is located on a side of the first wall 211 away from the electrode assembly 22. In other words, the portion of the second insulating member 234 provided on the outer side of the shell formed by enclosing the second wall 212 and the side wall 213 is folded onto the first wall 211, so that the second insulating member 234 forms the flanged portion 2341 located on the outer surface of the first wall 211. The flange portion 2341 is an annular structure extending along the circumferential direction of the first wall 211.

The flange portion 2341 and the edge of the first insulating member 233 together enclose to form the first hollowed region 231. That is, the first hollowed region 231 is formed by enclosing the flange portion 2341 which is an annular structure and the edge of the first insulating member 233 provided on the outer surface of the first wall 211. In other words, the inner edge of the flange portion 2341 and the outer edge of the first insulating member 233 together define the first hollowed region 231.

It should be noted that, in the embodiment where the minimum distance D₁ between the first exposed region 2111 and the edge of the first wall 211 is from 1mm to 5mm, referring to FIG. 8, since the first hollowed region 231 is a structure formed by enclosing the enclosure of the first insulating member 233 and the flange portion 2341, the minimum distance D₁ between the first exposed region 2111 and the edge of the first wall 211 is thus the width of the flange portion 2341, which means the width of the flange portion 2341 is from 1mm to 5mm.

The second insulating member 234 is provided with a flange portion 2341 arranged on the first wall 211 along the circumferential direction of the first wall 211 and located at the edge of the first wall 211, such that the edge of the first insulating member 233 arranged on the first wall 211 and a portion of the flange portion 2341 jointly enclose to form the first hollow region 231, thereby forming a first exposed region 2111 on the first wall 211. By using the structure, on the one hand, the battery cell 20 does not need to have the first insulating member 233 configured with a through-hole structure, which helps improve the overall structural strength of the first insulating member 233; and on the other hand, it is beneficial for controlling the size and dimensions of the first hollow region 231.

According to some embodiments of the present application, with reference to FIG. 7 and FIG. 9, along the thickness direction X of the first wall, a portion of the flange portion 2341 is located between the first wall 211 and the first insulating member 233.

A portion of the flange portion 2341 is located between the first wall 211 and the first insulating member 233. In other words, a portion of the first insulating member 233 is arranged on the side of the flange portion 2341 away from the first wall 211 along the thickness direction X of the first wall, so that the first insulating member 233 and the first wall 211 together press the flange portion 2341 tightly.

Exemplarily, in FIG. 7 and FIG. 9, the first insulating member 233 is of a rectangular structure, and the flange portion 2341 is a rectangular annular structure. The flange portion 2341 includes a first segment 2341a, a second segment 2341b, a third segment 2341c, and a fourth segment 2341d, which are sequentially connected along the circumferential direction of the first wall 211. Along the first direction Y, the first segment 2341a and the third segment 2341c are arranged opposite to each other; and along the second direction Z, the second segment 2341b and the fourth segment 2341d are arranged opposite to each other. The first direction Y, the second direction Z, and the thickness direction X of the first wall are mutually perpendicular. The two ends of the first insulating member 233 along the second direction Z are respectively lapped over the second segment 2341b and the fourth segment 2341d of the flange portion 2341, so as to arrange the flange portion 2341 between the first insulating member 233 and the first wall 211 in the thickness direction X of the first wall.

By providing the portion of the flange portion 2341 of the second insulating member 234 in the thickness direction X of the first wall between the first wall 211 and the first insulating member 233, the first insulating member 233 can press the portion of the flange portion 2341 against the first wall 211, which is beneficial for improving the connection stability of the flange portion 2341 of the second insulating member 234 on the first wall 211, thus reducing the occurrence of the flange portion 2341 falling off.

According to some embodiments of the present application, with reference to FIG. 7, FIG. 8, and FIG. 9, the first insulating member 233 and the flange portion 2341 jointly enclose to form two first hollow regions 231; and along the first direction Y, the two first hollow regions 231 are respectively located at the two ends of the first insulating member 233. The first direction Y is perpendicular to the thickness direction X of the first wall.

Along the first direction Y, the two first hollow regions 231 are respectively located at both ends of the first insulating member 233. In other words, the dimension of the first insulating member 233 in the first direction Y is smaller than the dimension of the flange portion 2341 in the first direction Y, so that both ends of the first insulating member 233 in the first direction Y can respectively form two first hollow regions 231 with the inner edge of the flange portion 2341. Thus, the two first hollow regions 231 are positioned at both ends of the first insulating member 233 in the first direction Y.

By enclosing the two ends of the first insulating member 233 with the flange portion 2341 in the first direction Y to form two hollow regions, two first exposed regions 2111 arranged in the first direction Y are formed on the first wall 211, and the two first exposed regions 2111 are respectively located at the two ends of the first insulating member 233. On the one hand, the arrangement allows the first wall 211 to connect with the compression strip 30 through the two first exposed regions 2111, which is beneficial for further enhancing the connection strength between the housing 21 and the compression strip 30. On the other hand, when the first exposed region 2111 and the compression strip 30 are connected to each other, the interference effect with the first insulating member 233 can be reduced, thereby lowering the assembly difficulty between the battery cell 20 and the compression strip 30.

In some embodiments of the present application, with reference to FIG. 7, FIG. 8, and FIG. 9, the flange portion 2341 includes a first segment 2341a, a second segment 2341b, a third segment 2341c, and a fourth segment 2341d connected sequentially along the circumferential direction of first wall 211. Along the first direction Y, the first segment 2341a and the third segment 2341c are arranged opposite to each other, and along the second direction Z, the second segment 2341b and the fourth segment 2341d are arranged opposite to each other. The first direction Y, the second direction Z, and the thickness direction X of the first wall are mutually perpendicular. The first insulating member 233 is positioned between the first segment 2341a and the third segment 2341c along the first direction Y. The first segment 2341a, a portion of the second segment 2341b, a portion of the fourth segment 2341d, and one end of the first insulating member 233 in the first direction Y together enclose to form one first hollow region 231. The third segment 2341c, a portion of the second segment 2341b, a portion of the fourth segment 2341d, and the other end of the first insulating member 233 in the first direction Y together enclose to form another first hollow region 231.

Along the first direction Y, the first segment 2341a is arranged opposite to the third segment 2341c, and along the second direction Z, the second segment 2341b is arranged opposite to the fourth segment 2341d, meaning that the flange portion 2341 of the second insulating member 234 is a rectangular annular structure.

The first insulating member 233 is positioned between the first segment 2341a and the third segment 2341c along the first direction Y. The first segment 2341a, a portion of the second segment 2341b, a portion of the fourth segment 2341d, and one end of the first insulating member 233 in the first direction Y together enclose to form one first hollow region 231. The third segment 2341c, a portion of the second segment 2341b, a portion of the fourth segment 2341d, and the other end of the first insulating member 233 in the first direction Y together enclose to form another first hollow region 231. In other words, along the first direction Y, the first insulating member 233 is located between the first segment 2341a and the third segment 2341c, and the first insulating member 233 and the first segment 2341a and the third segment 2341c are structures arranged at intervals. Along the second direction Z, both ends of the first insulating member 233 overlap with the second segment 2341b and the fourth segment 2341d, respectively, so that the first insulating member 233 covers a portion of the second segment 2341b and a portion of the fourth segment 2341d. This allows a first hollow region 231 to be formed between one end of the first insulating member 233 in the first direction Y and the first segment 2341a, and another first hollow region 231 to be formed between the other end and the third segment 2341c.

The flange portion 2341 is provided with a first segment 2341a, a second segment 2341b, a third segment 2341c, and a fourth segment 2341d that are connected sequentially along the circumferential direction of the first wall 211, where the first segment 2341a and the third segment 2341c are arranged opposite each other in the first direction Y, and the second segment 2341b and the fourth segment 2341d are arranged opposite each other in the second direction Z, making the flange portion 2341 a rectangular ring structure. By arranging the first insulating member 233 between the first segment 2341a and the third segment 2341c in the first direction Y, the edges of both ends of the first insulating member 233 in the first direction Y can respectively form two first hollow regions 231 with the flange portion 2341, where the structure is simple and easy to implement.

According to some embodiments of the present application, with reference to FIG. 3, FIG. 5, and FIG. 7, the second wall 212 and the side wall 213 are an integrally molded structure, wherein, along the thickness direction X of the first wall, one end of the side wall 213 is connected to the second wall 212, and the other end encloses to form an opening 2131. The first wall 211 is an end cap to close the opening 2131.

The second wall 212 and the side wall 213 enclose to form a hollow structure with an opening 2131 at one end along the thickness direction X of the first wall, and the first wall 211 covers the opening 2131, to form a housing 21 configured for accommodating the electrode assembly 22. Of course, in other embodiments, the second wall 212 and the side wall 213 can also be separate structures, that is, the side wall 213 is a hollow structure with openings 2131 at both ends along the thickness direction X of the first wall, and the first wall 211 and the second wall 212 respectively cover the two openings 2131 of the side wall 213.

The second wall 212 and the side wall 213 are molded as an integrated structure, meaning that the second wall 212 and the side wall 213 of the housing 21 are manufactured through an integrated molding process, such as stamping or casting.

By configuring the second wall 212 of the housing 21 and the side wall 213 into an integrally molded structure, with one end of the side wall 213 away from the second wall 212 forming an opening 2131 and the first wall 211 closing the opening 2131, the housing 21 is assembled from two components. The structure of the housing 21 facilitates covering the second insulating member 234 of the insulating member 23 over the outer surface of the integrally-formed second wall 212 and side wall 213, which is beneficial for reducing the assembly difficulty of the battery cell 20.

According to some embodiments of the present application, with reference to FIGS. 3 and 6, and with reference to FIGS. 7 and 10, FIG. 10 is a schematic diagram of a structure of a first insulating member 233 of a battery cell 20 provided in some embodiments of the present application. The battery cell 20 further includes an electrode terminal 25, wherein the electrode terminal 25 is arranged on the first wall 211 and is electrically connected with the electrode assembly 22. The insulating member 23 is provided with a mounting hole 235. The electrode terminal 25 passes through the mounting hole 235, and the mounting hole 235 is arranged at intervals with the first hollow region 231.

The mounting hole 235 is arranged at intervals with the first hollow region 231. That is, the electrode terminal 25 provided on the first wall 211 is arranged at intervals with the first hollow region 231, and a portion of the insulating member 23 is positioned between the electrode terminal 25 and the first hollow region 231.

The electrode terminal 25 is provided on the first wall 211, and the insulating member 23 is provided with a mounting hole 235 corresponding to the position of the electrode terminal 25, which allows the electrode terminal 25 to pass through. By arranging the mounting hole 235 and the first hollow region 231 at intervals, on one hand, the first exposed region 2111 formed corresponding to the first hollow region 231 on the first wall 211 can be arranged at intervals with the electrode terminal 25, so as to reduce interference with the electrode terminal 25 when the first exposed region 2111 is connected to external components; and on the other hand, it ensures that the insulating member 23 is not communicated between the first hollow region 231 and the mounting hole 235, thereby allowing the insulating member 23 to be sleeved on the electrode terminal 25 to enhance the connection reliability of the insulating member 23.

According to some embodiments of the present application, with reference to FIGS. 3 and 6, and with reference to FIGS. 7 and 10, a minimum distance between the first hollow region 231 and the mounting hole 235 is D₂, satisfying a condition: D₂ ≥ 0.5 mm.

The minimum distance between the first hollow region 231 and the mounting hole 235 is D₂. That is to say, in the arrangement direction of the first hollow region 231 and the mounting hole 235, the minimum dimension of the portion of the first insulating member 233 of the insulating member 23 positioned between the first hollow region 231 and the mounting hole 235 is D₂.

By setting the minimum distance between the first hollow region 231 and the mounting hole 235 to be greater than or equal to 0.5 mm, the minimum dimension of a portion of the insulating member 23 between the first hollow region 231 and the mounting hole 235 is greater than or equal to 0.5 mm, thereby alleviating the risk of fracture due to the dimension of the portion of the insulating member 23 between the first hollow region 231 and the mounting hole 235 being too small.

In some embodiments of the present application, with reference to FIGS. 3 and 6, and with reference to FIGS. 7 and 10, the insulating member 23 is provided with two first hollow regions 231 arranged along the first direction Y, so as to form two first exposed regions 2111 arranged along the first direction Y on the first wall 211. The first direction Y is perpendicular to the thickness direction X of the first wall. The first wall 211 is provided with two electrode terminals 25. The two electrode terminals 25 are arranged along the first direction Y, and the two electrode terminals 25 are located between the two first hollow regions 231. Along the first direction Y, the minimum distance between each first hollow region 231 and the adjacent mounting hole 235 is D₂.

It should be noted that in the embodiment where the first hollow region 231 is arranged on the first insulating member 233, as shown in FIG. 6, D₂ is the distance between the first hollow region 231 in the first direction Y and the adjacent mounting hole 235; and in the embodiment where the first insulating member 233 and the flanged portion 2341 of the second insulating member 234 enclose to form the first hollow region, as shown in FIG. 10, D₂ is the distance between the first hollow region 231 in the first direction Y and the adjacent end of the first insulating member 233.

The insulating member 23 is provided with two first hollow regions 231 arranged along the first direction Y; and two electrode terminals 25 are arranged on the first wall 211 along the first direction Y and are located between the two first hollow regions 231. This ensures that the minimum distance between the first hollow region 231 and the adjacent mounting hole 235 is D₂. Thus, by setting the minimum size of D₂, the risk of fracture occurring in the portion of the insulating member 23 located in the first direction Y between the first exposed region 2111 and the electrode terminal 25 during use can be reduced.

According to some embodiments of the present application, with reference to FIG. 3 and FIG. 7, the insulating member 23 is provided with two first hollow regions 231 arranged along the first direction Y, so as to form two first exposed regions 2111 arranged along the first direction Y on the first wall 211. The first direction Y is perpendicular to the thickness direction X of the first wall. Along the first direction Y, the electrode terminal 25 is positioned between the two first exposed regions 2111. In other words, two first hollow regions 231 are located on each side of the two electrode terminals 25 in the first direction Y so that one first hollow region 231, one electrode terminal 25, the other electrode terminal 25, and the other first hollow region 231 are sequentially arranged along the first direction Y.

Two first hollow regions 231 are arranged along the first direction Y on the insulating member 23 so as to form two first exposed regions 2111 on the first wall 211 along the first direction Y, and the electrode terminal 25 is arranged between the two first exposed regions 2111. On the one hand, it can further enhance the connection strength between the first wall 211 and the compression strip 30 through the two first exposed regions 2111; on the other hand, by arranging the two first exposed regions 2111 on both sides of the electrode terminal 25, the difficulty of connecting the battery cell 20 to the compression strip 30 during grouping can be reduced.

It should be noted that in some embodiments, the battery cell 20 can also be of other structures. For example, the housing 21 also includes a second wall 212, and the second wall 212 is arranged opposite to the first wall 211 in the thickness direction X of the first wall. The battery cell 20 also includes two electrode terminals 25, and the two electrode terminals 25 are respectively arranged on the first wall 211 and the second wall 212. Both electrode terminals 25 are electrically connected to the electrode assembly 22. In other words, the two electrode assemblies 22 configured for outputting or inputting the positive electrode and the negative electrode of the battery cell 20 are respectively arranged on both sides of the housing 21 in the thickness direction X of the first wall. Of course, in other embodiments, the electrode terminals 25 can also be arranged on the side wall 213.

By providing the two electrode terminals 25 of the battery cell 20 on the opposite first wall 211 and second wall 212 of the housing 21, the first wall 211 can be provided with more space to form the first exposed region 2111, and the difficulty of arranging the first hollow region 231 of the insulating member 23 can be reduced.

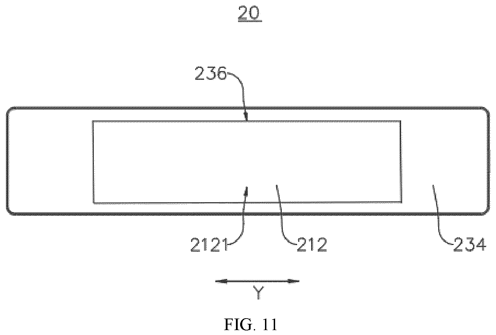

According to some embodiments of the present application, with reference to FIGS 3 and 5, and with further reference to FIG. 11, FIG. 11 is an upward view of a battery cell 20 provided in some embodiments of the present application. The housing 21 also includes a second wall 212, and the second wall 212 is arranged opposite to the first wall 211 in the thickness direction X of the first wall. The insulating member 23 is further provided with a second hollow region 236; along the thickness direction X of the first wall, the second hollow region 236 is positioned on a side of the second wall 212 that is away from the electrode assembly 22; the second wall 212 forms a second exposed region 2121 at a position corresponding to the second hollow region 236; and the second exposed region 2121 is configured for connecting with a box 10.

The second wall 212 forms a second exposed region 2121 at the location corresponding to the second hollow region 236, meaning that the insulating member 23 is provided with the second hollow region 236 so as to allow the second wall 212 of the housing 21 to have a region that is avoided by the second hollow region 236. Therefore, a second exposed region 2121 on the second wall 212, which is not covered by the insulating member 23, is formed.

Optionally, one or more second hollow regions 236 can be provided on the insulating member 23. Exemplarily, in FIG. 11, the insulating member 23 is provided with a second hollow region 236 so as to form a second exposed region 2121 on the second wall 212. Of course, in other embodiments, the number of second hollow regions 236 can also be two, three, four, or five, etc.

Exemplarily, the second hollow region 236 is rectangular, and correspondingly, the second exposed region 2121 formed on the second wall 212 is also rectangular. In other embodiments, the second hollow region 236 can be of various shapes, such as triangular, pentagonal, circular, or elliptical.

The second exposed region 2121 is configured for connection with the box 10, and the connection method between the second exposed region 2121 and the box 10 can be diverse, such as bonding or welding. Exemplarily, in the embodiments of the present application, the second exposed region 2121 is configured for bonding with the box 10.

It should be noted that in the embodiment where the insulating member 23 includes a first insulating member 233 and a second insulating member 234 that are arranged separately, the second hollow region 236 is arranged on the second insulating member 234. The second hollow region 236 is a through hole arranged on the second insulating member 234 and is located on the side of the second wall 212 that is away from the electrode assembly 22.

The first hollow region 231 and the second hollow region 236 are distributed and arranged at the positions of the insulating member 23 corresponding to both sides of the first wall 211 and the second wall 212, meaning that the insulating member 23 is provided with the first hollow region 231 and the second hollow region 236, which are respectively on the opposite sides of the housing 21 along the thickness direction X of the first wall; and thus, the first exposed region 2111 and the second exposed region 2121 are formed on the first wall 211 and the second wall 212 of the housing 21, respectively. This enables the first wall 211 and the second wall 212 of the housing 21 to connect with the compression strip 30 and the box 10 respectively through the first exposed region 2111 and the second exposed region 2121, enhances the structural stability of the battery cell 20 when assembled into the box 10, and allows the housing 21 to connect directly with the box 10, to reduce the phenomenon of easy detachment due to the indirect connection between the housing 21 and the box 10 through the insulating member 23.

According to some embodiments of the present application, the embodiments of the present application provide a battery 100, including the battery cell 20 according to any of the above solutions.

According to some embodiments of the present application, with reference to FIG. 2 and FIG. 3, the battery 100 further includes a box 10 and a compression strip 30, where both the compression strip 30 and the battery cell 20 are accommodated within the box 10, and the first exposed region 2111 is bonded to the compression strip 30.

Exemplarily, in FIG. 2, the battery cell 20 is placed upright inside the box 10, which means that the second wall 212 of the battery cell 20 is configured to support the electrode assembly 22, so that the second wall 212 can provide support to the electrode assembly 22 in the thickness direction X of the first wall. In other words, the first wall 211 of the housing 21 is arranged facing the top of the box 10, and the second wall 212 of the housing 21 is arranged facing the bottom of the box 10; or, during actual use, the second wall 212 of the housing 21 is oriented towards the ground or facing downward, making the thickness direction X of the first wall an up-down direction.

The compression strip 30 is arranged between the first wall 211 and the top of the box 10 in the thickness direction X of the first wall, and the compression strip 30 is bonded to the first exposed region 2111 formed by the first wall 211.

Optionally, the compression strip 30 is made of insulating material, and the material of the compression strip 30 can be rubber, plastic, silicone, etc.; and a compression strip 30 with the structure can achieve an insulated connection between the compression strip 30 and the battery cell 20, thus reducing the risk of leakage or short circuit.

It should be noted that in other embodiments, the battery cell 20 can be placed upside down inside the box 10, which means that the first wall 211 of the battery cell 20 is configured to support the electrode assembly 22, so that the first wall 211 can provide support to the electrode assembly 22 in the thickness direction X of the first wall. Therefore, the compression strip 30 is arranged between the first wall 211 and the bottom of the box 10 in the thickness direction X of the first wall, and the compression strip 30 is bonded to the first exposed region 2111 formed by the first wall 211.

The battery 100 is provided with a box 10 and a compression strip 30. By bonding the compression strip 30 to the first exposed region 2111 of the housing 21 of the battery cell 20, the battery cell 20 is fixed within the box 10 of the battery 100. The structure of the battery 100 allows the housing 21 of the battery cell 20 to bond directly to the compression strip 30, which enables the housing 21 to be connected indirectly to the compression strip 30 without the need for an insulating member 23. This helps to reduce the impact of the insulating member 23 on the bonding effectiveness between the battery cell 20 and the compression strip 30 and can effectively enhance the bonding strength, so as to reduce the phenomenon of easy detachment due to indirect bonding between the housing 21 and the compression strip 30 through the insulating member 23. Therefore, the structural stability of the battery cell 20 when assembled into the box 10 is enhanced, which lowers the risk of shaking or detachment of the battery cell 20 during use and improves the assembly quality and usage stability of the battery 100.

In some embodiments of the present application, with reference to FIG. 2 and FIG. 3, the battery 100 includes multiple battery cells 20, and the compression strip 30 bonds to the first exposed regions 2111 of the multiple battery cells 20.

The compression strip 30 is bonded to the first exposed regions 2111 of multiple battery cells 20, which means that one compression strip 30 is configured for bonding with the first exposed regions 2111 of the housings 21 of multiple battery cells 20.

The box 10 is therein provided with multiple battery cells 20, and the compression strip 30 is bonded to the first exposed regions 2111 of the multiple battery cells 20, thus connecting multiple battery cells 20 into a single unit through the compression strip 30. It is beneficial for enhancing the structural strength and the structural stability of multiple battery cells 20 within the box 10, further improving the usage stability of the battery 100.

According to some embodiments of the present application, with reference to FIG. 2, FIG. 3, and FIG. 11, the housing 21 also includes a second wall 212, and the second wall 212 is arranged opposite to the first wall 211 in the thickness direction X of the first wall. The insulating member 23 is further provided with a second hollow region 236; along the thickness direction X of the first wall, the second hollow region 236 is positioned on a side of the second wall 212 that is away from the electrode assembly 22; the second wall 212 forms a second exposed region 2121 at a position corresponding to the second hollow region 236; and the second exposed region 2121 is connected to the box 10.

Exemplarily, the battery cell 20 is placed upright within the box 10, so that the second exposed region 2121 formed by the second wall 212 is bonded to the bottom of the box 10. It should be noted that if the battery cell 20 is placed upright within the box 10, the second exposed region 2121 formed by the second wall 212 is then bonded to the top of the box 10.

By bonding the second exposed region 2121 of the housing 21 of the battery cell 20 to the box 10, the battery cell 20 is further fixed within the box 10. The structure of the battery 100 allows the housing 21 of the battery cell 20 to bond directly to the box 10, which enables the housing 21 to be connected indirectly to the box 10 without the need for an insulating member 23. This helps to reduce the impact of the insulating member 23 on the bonding effectiveness between the battery cell 20 and the box 10 and can effectively enhance the bonding strength. Therefore, the structural stability of the battery cell 20 when assembled into the box 10 is enhanced, which lowers the risk of shaking or detachment of the battery cell 20 during use and improves the assembly quality and usage stability of the battery 100.

According to some embodiments of the present application, the present application provides an electric device, comprising a battery 100 of any of the above solutions, and the battery 100 is configured to provide electrical energy to the electric device.

The electric device can be any of the above-mentioned devices or systems that apply the battery 100.

According to some embodiments of the present application, with reference to FIGS 3 to 7, the present application provides a battery cell 20, wherein the battery cell 20 includes a housing 21, an electrode assembly 22, an insulating member 23, and two electrode terminals 25. The housing 21 includes a first wall 211, a second wall 212, and a side wall 213. The first wall 211 and the second wall 212 are arranged opposite to each other along the thickness direction X of the first wall, and the side wall 213 is arranged around the periphery of the second wall 212 and integrally molded with the second wall 212. An end of the side wall 213, away from the second wall 212, forms an opening 2131, and the first wall 211 is an end cap for sealing the opening 2131. The electrode assembly 22 is housed within the housing 21. The insulating member 23 includes a first insulating member 233 and a second insulating member 234 that are separately provided, wherein the first insulating member 233 covers an outer surface of the first wall 211 away from the electrode assembly 22, and the second insulating member 234 covers an outer surface of the second wall 212 away from the electrode assembly 22 and the outer surface of the side wall 213 away from the electrode assembly 22. The first insulating member 233 is provided with two first hollow regions 231 arranged at intervals along the first direction Y, so as to form two first exposed regions 2111 on the first wall 211 at positions corresponding to the two first hollow regions 231. The first exposed regions 2111 are configured for bonding with the compression strip 30. The second insulating member 234 is provided with a second hollow region 236, and the second wall 212 forms a second exposed region 2121 at a position corresponding to the second hollow region 236. The second exposed region 2121 is configured for bonding with the box 10. An area of the first exposed region 2111 is S₁, satisfying a condition: S₁ ≥ 50 mm₂. The two electrode terminals 25 are arranged on the first wall 211 and electrically connected to the electrode assembly 22. Along the first direction Y, the two electrode terminals 25 are located between the two first exposed regions 2111. The first insulating member 233 is provided with mounting holes 235 for the electrode terminals 25 to pass through. The minimum distance between each first hollow region 231 and the adjacent mounting hole 235 is D₁, which satisfies a condition: D₁ ≥ 0.5 mm.

It should be noted that, without conflict, the embodiments and features described in the embodiments of the present application can be combined with each other.

The above are only preferred embodiments of the present application, which is not intended to limit, and the present application can have various changes and variations for those skilled in the art. Any modification, equivalent substitution, improvement, etc. made within the spirit and principles of the present application shall be included in the scope of protection of the present application.

## Claims

1. A battery cell, comprising
a housing comprising a first wall;
an electrode assembly housed within the housing; and
an insulating member covered on an outer side of the housing and covered on an outer surface of the first wall that is away from the electrode assembly in a thickness direction of the first wall, wherein
the insulating member is further provided with a first hollow region; along the thickness direction of the first wall, the first hollow region is positioned on a side of the first wall that is away from the electrode assembly; the first wall forms a first exposed region at a position corresponding to the first hollow region; and the first exposed region is configured for connecting with a compression strip.

2. The battery cell according to claim 1, wherein an area of the first exposed region is S, satisfying a condition: S ≥ 50 mm².

3. The battery cell according to claim 1 or 2, wherein a minimum distance between the first exposed region and an edge of the first wall is D₁, satisfying a condition: 1 mm ≤ D₁ ≤ 5 mm.

4. The battery cell according to any one of claims 1 to 3, wherein the housing further comprises a second wall and a side wall, the second wall is arranged opposite the first wall along the thickness direction of the first wall, the side wall is arranged around the first wall and the second wall; and
the insulating member comprises a first insulating member and a second insulating member which are separately provided, wherein the first insulating member covers an outer surface of the first wall away from the electrode assembly, and the second insulating member covers an outer surface of the second wall away from the electrode assembly and an outer surface of the side wall away from the electrode assembly.

5. The battery cell according to claim 4, wherein the first hollow region is provided on the first insulating member.

6. The battery cell according to claim 4, wherein the second insulating member is provided with a flange portion, the flange portion is arranged along a circumferential direction of the first wall and is located on a side of the first wall away from the electrode assembly, and the flange portion and an edge of the first insulating member jointly enclose to form the first hollow region.

7. The battery cell according to claim 6, wherein along the thickness direction of the first wall, and a portion of the flange portion is located between the first wall and the first insulating member.

8. The battery cell according to claim 6 or 7, wherein the first insulating member and the flange portion jointly enclose to form two first hollow regions; along a first direction, the two first hollow regions are respectively located at two ends of the first insulating member; and the first direction is perpendicular to the thickness direction of the first wall.

9. The battery cell according to claim 8, wherein the flange portion comprises a first segment, a second segment, a third segment, and a fourth segment connected sequentially along the circumferential direction of the first wall;
along the first direction, the first segment is arranged opposite the third segment; along the second direction, the second segment is arranged opposite the fourth segment; and the first direction, the second direction, and the thickness direction of the first wall are mutually perpendicular; and
the first insulating member is positioned between the first segment and the third segment along the first direction; the first segment, a portion of the second segment, a portion of the fourth segment, and one end of the first insulating member in the first direction together enclose to form a first hollow region; and the third segment, a portion of the second segment, a portion of the fourth segment, and another end of the first insulating member in the first direction together enclose to form another first hollow region.

10. The battery cell according to any one of claims 4 to 9, wherein the second wall and the side wall are an integrally molded structure; along the thickness direction of the first wall, an end of the side wall is connected to the second wall, and another end encloses to form an opening; and the first wall is an end cap to close the opening.

11. The battery cell according to any one of claims 1 to 10, wherein the battery cell further comprises
an electrode terminal, arranged on the first wall and electrically connected to the electrode assembly, wherein
the insulating member is provided with a mounting hole, the electrode terminal passes through the mounting hole, and the mounting hole is arranged at intervals with the first hollow region.

12. The battery cell according to claim 11, wherein a minimum distance between the first hollow region and the mounting hole is D₂, satisfying a condition: D₂ ≥ 0.5 mm.

13. The battery cell according to claim 12, wherein the insulating member is provided with two first hollow regions arranged along the first direction, so as to form two first exposed regions arranged along the first direction on the first wall, and the first direction is perpendicular to the thickness direction of the first wall; and
the first wall is provided with two electrode terminals; the two electrode terminals are arranged along the first direction, and the two electrode terminals are positioned between the two first hollow regions; and along the first direction, a minimum distance between each first hollow region and an adjacent mounting hole is D₂.

14. The battery cell according to claim 11 or 12, wherein the insulating member is provided with two first hollow regions arranged along the first direction, so as to form two first exposed regions arranged along the first direction on the first wall, and the first direction is perpendicular to the thickness direction of the first wall; and
along the first direction, the electrode terminal is positioned between the two first exposed regions.

15. The battery cell according to any one of claims 1 to 10, wherein the housing further comprises a second wall, and the second wall is arranged opposite the first wall along the thickness direction of the first wall; and
the battery cell further comprises two electrode terminals, wherein the two electrode terminals are respectively arranged on the first wall and the second wall, and the two electrode terminals are electrically connected to the electrode assembly.

16. The battery cell according to any one of claims 1 to 15, wherein the housing further comprises a second wall, and the second wall is arranged opposite the first wall along the thickness direction of the first wall; and
the insulating member is further provided with a second hollow region; along the thickness direction of the first wall, the second hollow region is positioned on a side of the second wall that is away from the electrode assembly; the second wall forms a second exposed region at a position corresponding to the second hollow region; and the second exposed region is configured for connecting with a box.

17. A battery, comprising the battery cell according to any one of claims 1 to 16.

18. The battery according to claim 17, wherein the battery further comprises a box and a compression strip, both the compression strip and the battery cell are accommodated within the box, and the first exposed region is bonded to the compression strip.

19. The battery according to claim 18, wherein the battery comprises multiple battery cells, and the compression strip bonds to the first exposed regions of the multiple battery cells.

20. The battery according to claim 18 or 19, wherein the housing further comprises a second wall, and the second wall is arranged opposite the first wall along the thickness direction of the first wall; and
the insulating member is further provided with a second hollow region; along the thickness direction of the first wall, the second hollow region is positioned on a side of the second wall that is away from the electrode assembly; the second wall forms a second exposed region at a position corresponding to the second hollow region; and the second exposed region is bonded to the box.

21. An electric device, comprising the battery according to any one of claims 17 to 20.
